# EUROPÄISCHE PATENTSCHRIFT

(11) **EP 1 630 105 B1**
(45) Veröffentlichungstag und Bekanntmachung des Hinweises auf die Patenterteilung: **10.10.2007**
(21) Anmeldenummer: 05017174.3
(22) Anmeldetag: 06.08.2005
(51) Int. Cl.: B65D 77/06, B29C 69/00, B29C 49/04, B29C 65/20

(54) **Verfahren zur Herstellung von Kunststoffbehältern für Flüssigkeiten**
Method of manufacturing a plastic container for liquids
Procédé de fabrication d'un récipient en matière plastique pour liquides

(30) Priorität: 18.08.2004 DE 102004039963
(43) Veröffentlichungstag der Anmeldung: 01.03.2006
(73) Patentinhaber: PROTECHNA S.A., 1701 Fribourg (CH)
(72) Erfinder: Schütz, Udo, 56242 Selters (DE)
(74) Vertreter: Pürckhauer, Rolf

(56) Entgegenhaltungen:
- EP-A- 1 577 081
- DE-A1- 2 906 974
- DE-A1- 10 146 822
- DE-A1- 10 242 954

## Beschreibung

Die Erfindung betrifft ein Verfahren zur Herstellung von Kunststoffbehältern für Flüssigkeiten, insbesondere zur Verwendung als Innenbehälter für Transport- und Lagerbehälter für Flüssigkeiten mit einem Außenmantel aus einem Gitterwerk oder Blechmaterial und einem palettenartigen Untergestell, die als quaderförmige oder kubische Behälter mit vier Seitenwänden, einem oberen Boden mit einem mittels eines Deckels verschließbaren Einfüllstutzen, einem unteren Boden sowie einer Entleeröffnung im unteren Abschnitt einer Seitenwand zum Anschluss einer Entnahmearmatur ausgebildet sind, wobei ein schlauchförmiger Vorformling in eine Blasform extrudiert und zu einem Behälter blasgeformt wird.

Aus der EP 1 577 081 A2, die auf einem älteren Recht beruht, ist ein gattungsgemäßes Verfahren zur Herstellung von Kunststoffbehältern für Flüssigkeiten bekannt, bei dem zunächst der Behälter mit einem ringförmigen Haltesegment an der Außenseite einer Einwölbung der Behältervorderwand zum Zentrieren und Halten des fertig geblasenen Behälters in einer Schweißmaschine und einer runden Vertiefung in der Außenseite der Einwölbung mit einem der Nennweite der als Klappen- oder Kugelhahn ausgebildeten Entnahmearmatur entsprechenden Durchmesser blasgeformt wird. Nach dem Entformen des abgekühlten Behälters wird der Boden der Vertiefung mit einem in dieser zentrierten Schneidwerkzeug zur Ausbildung der Entleeröffnung des Behälters ausgeschnitten. Anschließend wird die Entnahmearmatur, deren spritzgegossenes Gehäuse aus Kunststoff einen Einlaufstutzen und einen Auslaufstutzen aufweist, mit einem an deren Einlaufstutzen angeformten Befestigungsflansch, der durch einen Ringansatz in der Entleeröffnung des Behälters zentriert wird, am Außenrand der Entleeröffnung mittels einer Spiegelschweißmaschine angeschweißt.

Bei einer variante dieses bekannten Verfahren wird ein als Spritzgussteil vorgefertigter, mit einem Außengewinde versehener Entleerstutzen am Außenrand der Entleeröffnung des Behälters mittels einer Spiegelschweißmaschine angeschweißt, wobei der Entleerstutzen durch einen an diesem angeformten Ringansatz in der Entleeröffnung des Behälters zentriert wird. An den an dem Flüssigkeitsbehälter angeschweißten Entleerstutzen wird die fertig vormontierte Entnahmearmatur mit einer auf deren Einlaufstutzen gehaltenen Überwurfmutter angeschraubt. Dieses Verfahren hat sich in der Praxis nicht bewährt.

Die DE 101 46 822 A1 beinhaltet ein Verfahren zum Herstellung von Kunststoffbehältern, bei dem ein als Spitzgussteil gefertigter rohrförmiger vorformling mit einem geschlossenen Ende zunächst erhitzt, anschließend mittels eines Streckdorns gedehnt, danach der Vorformling zu einem Behälter mit einem Entleerstutzen blasgeformt wird und nach dem Aushärten des Kunststoffs und dem Entformen des Behälters die Behälterwand innerhalb des Entleerstutzens zur Herstellung der Entleeröffnung des Behälters ausgeschnitten wird. Danach wird in den Entleerstutzen des Behälters ein Verschlussträger mit Formschlusselementen zum Befestigen eines Verschlusses oder einer Zapfeinrichtung eingesetzt, und darauf folgend wird der Verschlussträger mit dem Entleerstutzen des Behälters fest verschweißt. Die nach diesem technisch aufwendigen Verfahren hergestellten Kunststoffbehälter sind für ein Massenprodukt zu teuer.

Der Erfindung liegt die Aufgabe zugrunde, das gattungsgemäße Verfahren zur Herstellung von mit einer Entnahmearmatur ausgestatteten Kunststoffbehältern für Flüssigkeiten im Hinblick auf eine hohe Produktionsleistung und einem günstigen Herstellungspreis der Behälter weiterzuentwickeln.

Diese Aufgabe wird erfindungsgemäß gelöst durch das Herstellungsverfahren gemäß dem Patentanspruch.

Die Erfindung in nachstehend anhand von Zeichnungsfiguren erläutert, die folgendes darstellen:
- Fig. 1: eine perspektivische Darstellung eines als Palettenbehälter ausgebildeten Flüssigkeitsbehälters aus Kunststoff und
- die Figuren 2 und 3: vergrößerte Darstellungen des Auslaufbereichs von zwei verschiedenen Ausführungsformen des Behälters zur Hälfte in einer Seitenansicht und zur Hälfte in einem Vertikalschnitt.

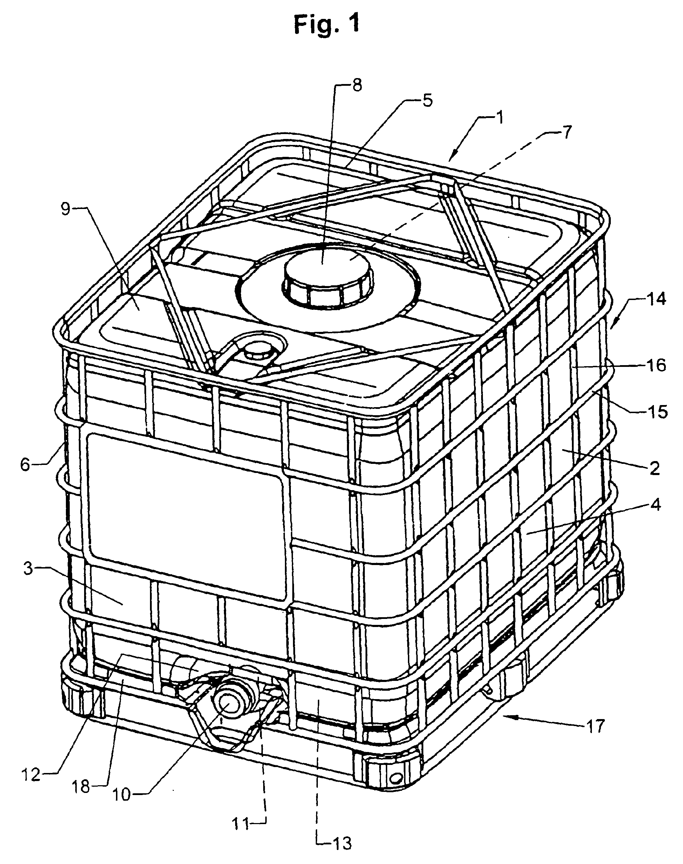

Der als Ein- und Mehrwegbehälter einsetzbare Transport- und Lagerbehälter 1 nach Figur 1 weist als Hauptbauteile einen austauschbaren, quaderförmigen Behälter 2 aus Kunststoff für Flüssigkeiten mit vier Seitenwänden 3-6 auf, der mit einem mit einem Deckel 8 verschließbaren Einfüllstutzen 7 im oberen Boden 9 und einer Entnahmearmatur 10, insbesondere einem Klappenhahn ausgestattet ist, die an eine Entleeröffnung 11 in einer domartigen Einwölbung 12 der Vorderwand 3 des Behälters 2 im Bereich des unteren Bodens 13 des Behälters zur Aufnahme der Entnahmearmatur 10 angeschlossen ist, ferner einen Außenmantel 14 aus sich kreuzenden, waagrechten und senkrechten Gitterstäben 15,16 aus Metall sowie ein palettenartiges Untergestell 17 mit euronormgerechten Längen- und Breitenabmessungen, dessen als flache Bodenwanne ausgebildeter Boden 18 aus Blech den Kunststoffbehälter 2 abstützt.

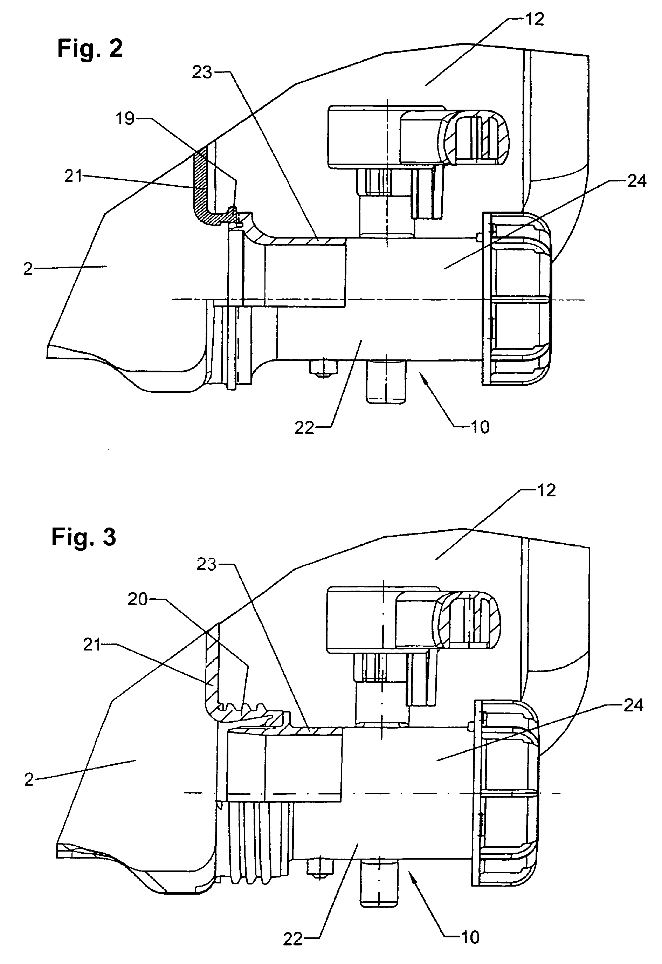

Der Behälter 2 wird durch Blasformen aus einem schlauchförmigen Vorformling hergestellt, wobei ein Halteflansch 19 (Figur 2) oder ein Gewindestutzen 20 (Figur 3) an den hinteren Abschnitt 21 einer die Entnahmearmatur 10 aufnehmenden unteren Einwölbung 12 der Vorderwand 3 des Behälters 2 angeformt wird. Nach dem Abkühlen des Behälters 2 wird dessen Einwölbung 12 innerhalb des Halteflansches 19 beziehungsweise des Gewindestutzens 20 mit einem Schneidwerkzeug zur Herstellung der Entleeröffnung 11 des Behälters 2 ausgeschnitten. Anschließend wird die fertig vormontierte Entnahmearmatur 10, deren spritzgegossenes Gehäuse 22 aus Kunststoff einen Einlaufstutzen 23 und einen Auslaufstutzen 24 aufweist, mittels einer Schweißmaschine, insbesondere einer Spiegelschweißmaschine mit dem Einlaufstutzen 23 an den Halteflansch 19 beziehungsweise den Gewindestutzen 20 des Behälters 2 angeschweißt, wobei der Behälter 2 durch den Halteflansch 19 oder den Gewindestutzen 20 in der Schweißmaschine zentriert und gehalten wird.

## Patentansprüche

1. Verfahren zur Herstellung von Kunststoffbehältern (2) für Flüssigkeiten, insbesondere zur Verwendung als Innenbehälter für Transport- und Lagerbehälter (1) für Flüssigkeiten mit einem Außenmantel (14) aus einem Gitterwerk (15, 16)oder Blechmaterial und einem palettenartigen Untergestell (17), die als quaderförmige oder kubische Behälter mit vier Seitenwänden(3-6), einem oberen Boden (9) mit einem mittels eines Deckels (8) verschließbaren Einfüllstutzen(7), einem unteren Boden (13) sowie einer Entleeröffnung (11) im unteren Abschnitt einer Seitenwand (3) zum Anschluss einer Entnahmearmatur (10) ausgebildet sind, **gekennzeichnet durch** das Blasformen der Behälter (2) aus einem schlauchförmigen Vorformling, wobei ein Halteflansch (19) oder ein Gewindestutzen (20) an den hinteren Abschnitt (21) einer die Entnahmearmatur (10) aufnehmenden unteren Einwölbung (12) der Vorderwand (3) der Behälter (2) angeformt wird, das Ausschneiden der Einwölbung (12) der Behälter (2) innerhalb des Halteflansches (19) beziehungsweise des Gewindestutzens (20) mit einem Schneidwerkzeug zur Herstellung der Entleeröffnung (11) der Behälter (2) sowie das Anschweißen der fertig vormontierten Entnahmearmatur (10) an den Halteflansch (19) oder den Gewindestutzen (20) in einer Schweißmaschine, wobei zum Anschweißen der Entnahmearmatur (10) an die Behälter (2) diese mittels des Halteflansches (19) oder des Gewindestutzens (20) in der Schweißmaschine zentriert und gehalten werden.

## Claims

1. Process for the production of plastic containers (2) for liquids, in particular for use as inner containers for transport and storage containers (1) for liquids with an outer shell (14) composed of a grating structure (15, 16) or sheet metal material and a pallet-like supporting frame (17), which are configured as parallelepipedal or cubic containers with four side walls (3-6), an upper floor (9) with a filler connection (7), which can be closed by a cover (8), a lower floor (13) as well as a discharge opening (11) in the lower section of a side wall (3) for connection of a removal fitting (10), **characterised by** the blow moulding of the containers (2) from a tubular preform, wherein a holding flange (19) or a threaded connection (20) is moulded onto the rear section (21) of a lower inward bulge (12) of the front wall (3) of the containers (2) receiving the removal fitting (10), the cutting out of the inward bulge (12) of the containers (2) inside the holding flange (19) or threaded connection (20) respectively with a cutting tool for the production of the discharge opening (11) of the containers (2) and also the welding of the finished preassembled removal fitting (10) to the holding flange (19) or the threaded connection (20) in a welding machine, wherein to weld the removal fitting (10) onto the containers (2), these are centred and held in the welding machine by means of the holding flange (19) or the threaded connection (20).

## Revendications

1. Procédé de fabrication de cuves (2) à liquide en matière plastique, à utiliser notamment comme cuves intérieures pour des cuves (1) de transport et de stockage de liquides, ayant une enveloppe (14) extérieure en un treillis (15, 16) ou en un matériau en tôle et un sous-bâti (17) du type palette, qui sont constituées sous la forme de cuves parallélépipédiques ou cubiques ayant quatre parois (3 à 6) latérales, un plateau (9) supérieur ayant une tubulure (7) de remplissage pouvant être fermée au moyen d'un couvercle (8), un plateau (13) inférieur ainsi qu'une ouverture (11) de vidange dans la partie inférieure d'une paroi (3) latérale pour le raccordement d'un robinet (10) de prélèvement, **caractérisé par** moulage par soufflage de la cuve (2) à partir d'une ébauche en forme de tube souple, une bride (19) de maintien ou une tubulure (20) filetée étant formée sur la partie (21) arrière d'une voussure (12) inférieure de la paroi (3) avant de la cuve (2) recevant le robinet (10) de prélèvement, par la coupe de la voussure (12) de la cuve (2) à l'intérieur de la bride (9) de maintien ou de la tubulure (20) filetée par un outil de coupe pour ménager l'ouverture (11) de vidange de la cuve (2), ainsi que par la soudure du robinet (10) de prélèvement prémonté à l'état fini sur la bride (19) de maintien ou sur la tubulure (20) filetée dans une machine de soudage, dans lequel, pour la soudure du robinet (10) de prélèvement à la cuve (2), celle-ci est centrée et est maintenue dans la machine de soudage au moyen de la bride (19) de maintien ou de la tubulure (20) filetée.
